Europäisches Patentamt

European Patent Office

Office européen des brevets

(19)

(11) Publication number: 0 271 329
A2

# (12) EUROPEAN PATENT APPLICATION

(21) Application number: 87310821.1

(22) Date of filing: 09.12.87

(51) Int. Cl.⁴: C 04 B 7/32

(30) Priority: 09.12.86 AU 9408/86

(43) Date of publication of application:
15.06.88 Bulletin 88/24

(84) Designated Contracting States:
AT BE CH DE ES FR GB GR IT LI LU NL SE

(71) Applicant: COMMONWEALTH SCIENTIFIC AND
INDUSTRIAL RESEARCH ORGANISATION
Limestone Avenue
Campbell Australian Capital Territory (AU)

Valenti, Gian Lorenzo
Via Legittimo 1/a
I-80063 Piano di Sorrento Napoli (IT)

Santoro, Luciano
Via Naccherino 11
I-80131 Napoli (IT)

Cioffi, Raffaele
Via dei Pini 14
I-80063 Piano di Sorrento Napoli (IT)

(72) Inventor: Beretka, Julius
7 Peace Street
Glen Iris Victoria 3146 (AU)

Valenti, Gian L.
Via Legittimo 1/a
F-80063 Piano di Sorrento§Napoli (IT)

Santoro, Luciano
Via Naccherino 11
I-80131 Napoli (IT)

Cioffi, Raffaele
Via dei Pini 14
I-80063 Piano di Sorrento Napoli (IT)

(74) Representative: Harrison, Michael Robert et al
Urquhart-Dykes & Lord 91 Wimpole Street
London W1M 8AH (GB)

(54) Hydraulic binders and building elements formed of non-traditional materials.

(57) A process is disclosed for the formation of hydraulic binders and building elements comprising from 70% ettringite and up to 30% calcium silicate hydrates. Ettringite is a very strong mineral and the product may be at least the equal in terms of mechanical properties of Portland cement while suffering shrinkage and expansion problems. The process comprises mixing powdered source materials of reactive $CaSO_4$, $CaO$ and $Al_2O_3$ with or without $SiO_2$ and hydrating the intimate mixture at a ratio in the range of l part powdered source materials to 0.35-l part water. Most conveniently, impure source materials such as industrial by-products are used as they have been found to catalyse the hydration reaction. Further if gypsum is a powdered source material, in a natural, pure or chemical form, it is preferably calcined since such material sets quickly and gives early mechanical strength. A clinker of calcium sulphoaluminate may be produced for use as a powdered source material.

FIG 1

## Description

HYDRAULIC BINDERS AND BUILDING ELEMENTS FORMED OF NON-TRADITIONAL MATERIALS

The present invention relates to hydraulic binders and to building elements formed of non-metallic inorganic material, and is particularly concerned with ettringite which may occur in small proportions in Portland cement and is a quarternary compound in the system $CaO.Al_2O_3.SO_3.H_2O$, having the formula $3CaO.Al_2O_3.3CaSO_4.3l\text{-}33H_2O$ ($C_6A\overline{S}_3H_{32}$).

Of all the previously known hydraulic binders, Portland cement and its blended varieties have been of the greatest practical importance from the point of view of production volume, economic significance and technical weight.

The main minerals found in Portland cement are:

(I) Tricalcium silicate, $3CaO.SiO_2$ ($C_3S$), which is the most important phase both quantitatively ($>50\%$ in ordinary Portland cement) and qualitatively as it is the main strength building phase;

(2) Dicalcium silicate, $2CaO.SiO_2$ ($C_2S$), which is present in the range 25-35% in ordinary Portland cement. Its rate of hydration is slower than $C_3S$ but it is also a carrier of strength;

(3) Tricalcium aluminate, $3CaO.Al_2O_3$ ($C_3A$) which is present in the range l0-l2% as a dark interstitial phase in ordinary Portland cement. It reacts rapidly with water giving an unstable set and, to alleviate this, gypsum $CaSO_4.2H_2O$ C $\overline{S}H_2$) is usually added to the Portland cement clinker. The presence of $C_3A$ is beneficial from the point of view of strength and structure formation, but it makes the cement sensitive to sulphate-induced corrosion; and

(4) Ferrite solid solution series, $3CaO.^1/_2Al_2O_3.^1/_2Fe_2O_3$ approximately ($C_2AFeO_5$) which is present in a range upto l5% as a light interstitial phase in ordinary Portland cement and is less sensitive to sulphate-induced corrosion than $C_3A$.

Other minerals may or may not exist in ordinary Portland cement clinker. Most important of these are free lime and calcium sulphoaluminate ($C_4A_3\overline{S}$). Free lime occurs as an impurity as a consequence of incorrect composition, homogenisation or burning of the clinker. $C_4A_3\overline{S}H_{12}$ is the constituent of some expansive shrinkage-compensating cements because it transforms to ettringite during hydration which causes considerable expansion. The expansion properties of ettringite in Portland cement are due to its being a very strong material which if present forms between the $C_3S$, $C_2S$, $C_3A$ and ferrite crystals causing them to separate. Ettringite is theoretically one of the strongest mineral phases that may be present in Portland cement.

Ettringite and/or tetracalcium aluminate sulphate ($C_4A\overline{S}H_{12}$) may also form in Portland cement in the presence of gypsum and water from tricalcium aluminate ($C_3A$). The $C_6A\overline{S}_3H_{32}/C_4A\overline{S}H_{12}$ ratio depends on both the $C_3A/\overline{S}$ molar ratio and the relative rates of reaction. In ordinary Portland cements the $C_3A/\overline{S}$ molar ratio is close to unity with the consequence that $C_4A\overline{S}H_{12}$ is generally the final product. However, since the formation of $C_6A\overline{S}_3H_{32}$ is faster than $C_4A\overline{S}H_{12}$, $C_4A\overline{S}H_{12}$ is usually formed via the ettringite. Expansion and subsequent cracking of mortar or cement containing ettringite and/or $C_4A\overline{S}H_{12}$ may occur and is due to the fact that ettringite has a much higher molar volume than $C_4A\overline{S}H_{12}$. Ettringite has not been known to be present in Portland cement mortars in a proportion greater than 5%.

We have now surprisingly found that it is possible to produce a hydraulic binder or building element comprising at least a major proportion of ettringite having many properties which are the equal of or better than those properties of Portland cements.

According to a first aspect of the present invention there is provided a method of producing a hydraulic binder which comprises preparing an intimate mixture of powdered source materials in natural and/or industrial by-product form of reactive $CaSO_4$, $CaO$ and $Al_2O_3$ with or without $SiO_2$, said powdered source materials having a maximum particle size of about l50μm, and hydrating the intimate mixture at a ratio in the range of approximately I part powdered source materials to 0.35-I part water, said source materials being mixed in such proportions as to produce a cured hydraulic binder comprising from 70% ettringite and a maximum 30% calcium silicate hydrates.

Further according to the first aspect of the invention there is provided a hydraulic binder when produced by the method described in the immediately preceding paragraph.

According to a second aspect of the present invention there is provided a method of producing a building element which comprises preparing an intimate mixture of powdered source materials in natural and/or industrial by-product form of reactive $CaSO_4$, $CaO$ and $Al_2O_3$ with or without $SiO_2$, said powdered source materials having a maximum particle size of about l50μm, and hydrating the intimate mixture at a ratio in the range of approximately I part powdered source materials to 0.35-I part water, and before or during said hydrating step introducing the intimate mixture into a mould to define the building product, said source materials being mixed in such proportions as to produce a cured building product comprising from 70% ettringite and a maximum 30% calcium silicate hydrates.

Further according to the second aspect of the invention there is provided a building element when produced by the method described in the immediately preceding paragraph.

The invention also comprises compositions suitable for use in accordance with the above methods.

The formation of ettringite among the hydration products in systems containing the aforementioned powdered source materials is particularly interesting because (a) in the building elements it mainly gives properties of relatively low density and of potential fire resistance, and (b) with reference to the non-traditional hydraulic binders it is one of the most important hydration products of cements based on phases other than tricalcium silicates ($C_3S$), being responsible for the development of mechanical strength at early ages.

As noted already Portland cement is the most widely employed hydraulic binder in the world. It has most of its characteristics and properties, particularly early hardening, arising from the presence of tricalcium silicate ($C_3S$) among its constituents. Tricalcium silicate is the most important clinker component and requires very high synthesis temperatures (about $1500°C$). A substantial energy saving can be obtained by substituting tricalcium silicate with different phases of similar properties but requiring lower sythesis temperatures. Thus, by providing ettringite as the major component of the hydraulic binder and/or building element in accordance with the invention, it is not necessary to produce a clinker at all. However, Portland cement may conveniently be included in the powdered source materials.

As will be described in greater detail hereinafter ettringite may be produced from pure, natural or waste materials. It can be cast in situ and sets early, then develops high strength which may even be better than Portland cements at similar water/solids ratios. Since ettringite contains a substantial proportion of water the hydraulic binder or the building element of the invention may have better fire resistance than gypsum plaster or Portland cement concretes and its water resistance and solubility are believed to be similar to Portland cements; furthermore it may suffer reduced carbonation compared to Portland cements. The density of pure ettringite is $1.73g/cm^3$ at $25°C$.

It has previously been proposed to use ettringite as a building material. For example, Japanese patent specification 83013494 (53032900) proposes utilizing a material including ettringite as a fire-resisting board but the method of manufacture proposed has an added water content of 5-20 times greater than the raw material which itself includes aqueous slag. It is believed that this would produce a material having a relatively low proportion of ettringite and, in view of the very large amount of water which would lead to free crystals being formed, a low mechanical strength so that the material would not be suitable for replacing Portland cement.

It is believed that by hydrating the powdered source materials in accordance with the invention in relatively small quantities of water, the ettringite crystals, possibly of needle-like shape, are able to interlock and thereby increase the strength of the product. The theoretical required water content in the powdered source material to form the ettringite is 0.45:1 but more water may be required if industrial by-products are being used as the source material and/or if the powdered source material is particularly fine. The preferred water content is 0.5-0.6 to 1. Improved reactivity of the powdered source material may be achieved if the material is particularly fine and preferably the size range is less than $100\mu m$, most preferably less than $50\mu m$. The particle size range may extend down to less than $1\mu m$. Improved reactivity of the powdered source material and greater strength in the end product have also been found to be achieved if the powdered source material is impure, for example in the form of industrial by-products.

There are several methods for the preparation of ettringite using pure compounds. Thus it can be produced from pure compounds such as hydrated or calcined pure or natural gypsum, alumina or alumina gel and calcined or hydrated lime. More generally synthetic ettringite can be made from CaO or $Ca(OH)_2$, $Al_2O_3$ and sulphate such as $Na_2SO_4$ or $CaSO_4$ by inorganic synthesis.

One example of a two-stage reaction using pure compounds is:

i) 4 mole of CaO is reacted with 1 mole of $Al_2O_3$ in suspension for 10 days at room temperature to form tetracalcium aluminate hydrate, $4CaO.Al_2O_3.H_2O$ ($C_4AH$).

ii) $C_4AH$ is reacted with $Na_2SO_4$ (or other source of sulphate) in solution at room temperature for 30 minutes to form ettringite. The resulting material is a fine crystalline white powder. Stoichiometric proportions (by weight) of other pure source materials are 64.9% gypsum as $CaSO_4.2H_2O$, 18.2% CaO and 16.9% $Al(OH)_3$. The preferred ranges of these materials are 50-70% $CaSO_4.2H_2O$, 15-25% CaO and 15-35% $Al(OH)_3$.

Ettringite can also be prepared from pure compounds by slowly adding a volume of nearly saturated lime solution with stirring to an equal volume of a solution containing the appropriate amount of aluminium sulphate and calcium sulphate to satisfy the equation:

$$Al_2(SO_4)_3aq + 6CaO = 3CaO.Al_2O_3.3CaSO_4.31\text{-}33H_2O$$

and the condition that the final solution will contain at least 0.215g $CaSO_4$, 0.043g CaO and 0.035g $Al_2O_3$ per liter.

However, our present understanding is that a considerable amount of additional energy would be required to produce a material suitable for the present invention by the pure route, and as noted hitherto increased strength and greater reactivity is achieved by the use of impure materials.

The presence of upto 30% calcium silicate hydrates together with the ettringite also enhances durability and mechanical strength at later ages, and in order to have ettringite and calcium silicate hydrates in the final product reactive silica must be available in the powdered source material. The product of the invention preferably contains at least 75% ettringite, most preferably at least 90% ettringite and upto 10% calcium silicate hydrates. Other reaction products may also be present in small proportions, as well as impurities, and, for example, it has been found that upto 2% lime may be present in the product without harming the properties of the product. Where impure and particularly industrial by-product source materials are used, the ettringite may include intestitial impurities in its crystal lattice which have been found to catalyse the conversion of the source materials to ettringite. Thus, where phosphogypsum is used as a source material, the ettringite may include intestitial phosphorous or phosphorous compounds.

The following is a list of the preferred sources of the powdered source material:

reactive $CaSO_4$ powdered material: pure gypsum, natural gypsum, chemical gypsum and calcium sulphoaluminate;

reactive $Al_2O_3$ powdered material: gibbsite, $Al(OH)_3$, boehmite, fly ash, blast furnace slag, clay, clay waste, granite dust, bauxite, bauxite waste, basalt, Portland cement, precipitator dust and calcium sulphoaluminate;

reactive $CaO$ powdered material: hydrated lime $(Ca(OH)_2)$, quicklime $(CaO)$, fly ash, blast furnace slag, granite dust, precipitator dust, Portland cement and calcium sulphoaluminate;

reactive $SiO_2$ powdered material: pure silica $(SiO_2)$, commercial silica (sand, ground sand), clay, clay waste, fly ash, blast furnace slag, granite dust, precipitator dust, basalt and Portland cement.

It will be appreciated that any of the powdered source materials may be derived from other appropriate sources including industrial by-products which have not been listed.

The proposed chemical gypsums may take any suitable form, examples of which are phosphogypsum, sulphogypsum and titanogypsum. The gypsum may be present in the natural, dihydrated form, calcined as the hemihydrate or be present as anhydrite.

Where gypsum material which is used as the source of sulphate is calcined, there is a substantial contribution to mechanical strength at early ages which arises from the setting of the calcined gypsum, a non-hydraulic binder. Ongoing contributions to strength are due to the formation of the ettringite and, optionally as mentioned above, calcium silicate hydrates. Ettringite has been found to be formed at early ages especially at elevated temperatures and to provide high strength bonds and products when suitably pre-mixed with aggregate. The calcined gypsum, which is preferably in the form of phosphogypsum, can be produced at a relatively low temperature of about 200°C and its early hardening characteristic prior to conversion to ettringite can be enhanced by mixing with Portland cement as a powdered source material. Mixing with other powdered source materials such as blast furnace slag and fly ash may also neutralize any tendency of the calcined gypsum and Portland cement mixture to expand. Thus, mixtures of calcium sulphate hemihydrate, fly ash and Portland cement in composition weight ratio 30:50:20 and of calcium sulphate hemihydrate, fly ash, lime and Portland cement in composition weight ratio 26.0:43.4:13.3:17.3, both cured at 21°C and 55°C up to 182 days have been found to not produce any measurable shrinkage or expansion. The development of mechanical strength is very similar for both compositions and at the longest aging times values of the order of 40-45 MPa at 55°C and 20-25 MPa at 21°C are reached. No strength retrogression has been observed.

The following are tables showing preferred ranges for some mixtures of powdered source materials used in the method of the invention. However, it will be appreciated that the compositions of many of the materials, particularly when present as industrial by-products, may vary considerably and the proposed ranges should not be construed as limiting for the production of the desired hydraulic binder and building element. The first two sets of ranges may be more appropriate for the building element while the remainder are more suitable for the hydraulic binder:

|     |                                      | Range (% by wt.) |
| --- | ------------------------------------ | ---------------- |
| (a) | Gypsum, $CaSO_4.2H_2O$               | 45 – 25          |
|     | Blast Furnace Slag                   | 55 – 75          |
|     | Lime, $CaO$                          | 0.5 – 1.5        |
|     |                                      |                  |
| (b) | Gypsum, $CaSO_4.2H_2O$               | 5 – 25           |
|     | Fly Ash                              | 45 – 65          |
|     | Lime                                 | 50 – 15          |
|     |                                      |                  |
| (c) | Calcium Sulphoaluminate, $C_4A_3\bar{S}$ | 20 – 30      |
|     | Gypsum, $CaSO_4.2H_2O$               | 60 – 40          |
|     | Lime, $CaO$                          | 10 – 30          |
|     |                                      |                  |
| (d) | Calcium Sulphoaluminate, $C_4A_3\bar{S}$ | 20 – 60      |
|     | Gypsum, $CaSO_4.2H_2O$               | 30 – 15          |
|     | Blast Furnace Slag                   | 50 – 35          |
|     | Lime, $CaO$                          | 1                |
|     |                                      |                  |
| (e) | Calcium Sulphoaluminate, $C_4A_3\bar{S}$ | 20 – 60      |
|     | Gypsum, $CaSO_4.2H_2O$               | 30 – 15          |
|     | Fly Ash                              | 30 – 15          |
|     | Lime, $CaO$                          | 20 – 10          |

|  | | Range (% by wt.) |
|---|---|---|
| (f) | Calcium Sulfate Hemihydrate, $CaSO_4 \cdot \frac{1}{2}H_2O$ | 20 – 50 |
|  | Portland Cement | 40 – 15 |
|  | Fly Ash | 55 – 30 |
| (g) | Calcium Sulfate Hemihydrate, $CaSO_4 \cdot \frac{1}{2}H_2O$ | 20 – 40 |
|  | Portland Cement | 20 – 10 |
|  | Fly Ash | 40 – 50 |
|  | Lime, CaO | 30 – 10 |

As previously noted herein, ettringite can be generated from the hydration of calcium sulphoaluminate ($C_4A_3\bar{S}$). Depending on the rate of formation of ettringite, rapid hardening, shrinkage-compensating and self-stressed cements can be obtained. $C_4A_3\bar{S}$ ($3CaO.3Al_2O_3.CaSO_4$) can be synthesised by firing an intimate mixture of calcium carbonate, alumina and gypsum (stoichiometric wt.% composition 32:50:18) at a temperature in the range of 900-1350°C for from 30 minutes to 10 hours.

It has been found that the use of phosphogypsum instead of pure gypsum allows the temperature and the time required for the calcium sulphoaluminate synthesis to be considerably reduced. In fact upon firing in an electric furnace, less than 90 minutes at 1000°C and about 30 minutes at 1100°C are sufficient to get almost complete conversion, while when pure gypsum is used, 3 hours at 1350°C and 10 hours at 1200°C are necessary to get conversion greater than 99%.

Other chemical gypsums and industrial by-products containing reactive lime and alumina can be used as reactants in the raw mix for the calcium sulphoaluminate synthesis.

Phosphogypsum impurities show catalytic activity not only in the synthesis of calcium sulphoaluminate, but also towards the formation of ettringite. Stoichiometric mixtures of calcium sulphoaluminate, phosphogypsum and lime reach 50% conversion into ettringite after 24 hours at 25°C. Complete conversion of this mixture to ettringite may occur over two to seven days at 25°C thereby readily facilitating the use of this material as a hydraulic binder.

Where powdered source materials comprising calcined chemical gypsum (phosphogypsum), lime and alumina are hydrated up to 32 days under 100% r.h. at temperatures ranging from 20 to 85°C, preferably 25 to 80°C, ettringite is a stable product up to at least 60°C. This temperature range and the stoichiometric composition for the formation of ettringite are optimum conditions in terms of yield of the product. Under these conditions, after 13 days aging, the concentration of ettringite reaches 60% and continues to increase.

Other systems containing natural or chemical gypsums different from phosphogypsum and other natural materials or industrial by-products able to act as sources of reactive lime and alumina can be usefully employed particularly for the manufacture of building elements based on ettringite only. Blast furnace slag and high-calcium fly ash contain reactive lime, silica and alumina; low-calcium fly ash may require extra addition of lime.

Where powdered source materials comprising calcined phosphogypsum and blast furnace slag are hydrated at 25°C up to 182 days with phosphogypsum to slag composition weight ratios equal to 5/100, 10/100 and 20/100, the conversion of calcium sulphate into ettringite reaches in any case 80% after 28 days aging and then remains unchanged. Slag conversion into calcium silicate hydrate increases as the ratio of phosphogypsum/slag increases and reaches values of the order of 25% after 182 days for the highest value of the above composition ratio.

Similar systems containing pure gypsum instead of phosphogypsum show less favourable behaviour in terms of yield of the two hydration products.

When powdered source materials comprising calcined phosphogypsum, fly ash and lime are hydrated up to 182 days at 25°C and up to 56 days at 40°C with composition weight ratios equal to 10, 20 and 30 parts of phosphogypsum per 100 parts of a 60:40 mixture of fly ash and lime, it has been found that the times of gypsum complete conversion into ettringite are 28, 56 and 91 days at 25°C and 14, 28 and 56 days at 40°C for the compositions containing 10, 20 and 30 parts of phosphogypsum, respectively. Furthermore, lime conversion into calcium silicate hydrate ranges between 37 and 47.5% in the different conditions tested.

Also in the case of this system phosphogypsum proves to be more efficient than pure gypsum not only towards the formation of ettringite, but also in stimulating the formation of calcium silicate hydrate.

Adequate CaO should be included in the powdered source material to ensure the required conversion to ettringite on hydration and it has been found that 2% CaO may be retained in the end product without harming the properties of the product.

The preferred relative humidity for curing the hydraulic binder and/or building element of the invention is 100% and water of hydration may be taken in from atmosphere if insufficient is available in the mixture, but a lower relative humidity may be appropriate as is known in the art of hydraulic binders. The preferred hydration temperature range is 20°C to 55°C at atmospheric pressure but curing may be performed in, for example, an autoclave, at elevated temperature (above 85°C) and pressure.

EXAMPLES:

In the following Examples, proportions are given in weight percentage. The proportion of ettringite in the final product of Example I is about 70% while the said proportion in the other Examples is over 75% and in some cases is believed to be over 90%. The powdered source material all passed through a 150μm sieve. Mechanical strengths of the specimens were measured using 25mm cubed samples. While the specimens having relatively high compressive strengths are entirely suitable for use as structural building elements, those having lower compressive strengths may be appropriate for use in non-load bearing applications.

## Example 1

Calcined gypsum – 30%        Cured at 100% r.h.

Fly ash        – 50%        Water/solids ratio, 0.5

Portland cement – 20%

| Days cured | Compressive strength (MPa) | | Density (kg/m3) | |
| --- | --- | --- | --- | --- |
| | 23°C | 55°C | 23°C | 55°C |
| 1 | 2.9 | 12.1 | 1234 | 1305 |
| 4 | 3.4 | 21.7 | 1264 | 1336 |
| 7 | 5.2 | 27.1 | 1296 | 1358 |
| 14 | 9.0 | 29.3 | 1316 | 1332 |
| 28 | 18.5 | 32.3 | 1352 | 1324 |
| 56 | 19.8 | 35.5 | 1342 | 1344 |
| 90 | 22.7 | 39.0 | 1377 | 1356 |
| 180 | 26.9 | –– | 1378 | –– |

Example 2

Calcined gypsum - 26%

Portland cement - 17%      Cured at 100% r.h.,

Fly ash        - 44%      Water/solids ratio, 0.5

Lime           - 13%

| Days cured | Compressive strength (MPa) | | Density (kg/m3) | |
|---|---|---|---|---|
| | 23°C | 55°C | 23°C | 55°C |
| 1 | 2.2 | 9.1 | 1177 | 1198 |
| 4 | 3.1 | 25.5 | 1222 | 1200 |
| 7 | 4.7 | 38.3 | 1223 | 1225 |
| 14 | 7.5 | 42.8 | 1266 | 1306 |
| 28 | 11.6 | 40.5 | 1326 | 1324 |
| 56 | 17.7 | 50.0 | -- | -- |
| 90 | 26.2 | 50.6 | -- | -- |

Example 3

Calcined gypsum - 31%

Portland cement - 15%      Cured at 100% r.h.,

Fly ash        - 31%      Water/solids ratio, 0.5

Lime           - 23%

| Days cured | Compressive strength (MPa) | |
|---|---|---|
| | 23°C | 55°C |
| 1 | 1.1 | 6.2 |
| 4 | 2.6 | 19.9 |
| 7 | 3.6 | 26.9 |
| 14 | 6.4 | 24.9 |
| 28 | 11.7 | 21.6 |
| 56 | 14.7 | 27.2 |
| 90 | 15.6 | 34.7 |

Example 4

| | |
|---|---|
| Calcined gypsum – 40% | Cured at 100% r.h., 55°C |
| Portland cement – 20% | Water solids ratio, 0.5 |
| Fly ash – 40% | |

| Days cured | Compressive strength (MPa) |
|---|---|
| 1 | 15.6 |
| 4 | 28.3 |
| 7 | 29.9 |
| 14 | 32.3 |
| 28 | 33.4 |
| 56 | 39.3 |
| 90 | 42.7 |

Example 5

| | |
|---|---|
| Calcined gypsum – 21% | |
| Blast furnace slag – 55% | Cured at 100% r.h., 55°C |
| Portland cement – 14% | Water/solids ratio, 0.5 |
| Lime – 10% | |

| Days cured | Compressive strength (MPa) | Density (kg/m$^3$) |
|---|---|---|
| 1 | 7.4 | 1398 |
| 4 | 12.9 | 1467 |
| 7 | 18.1 | 1496 |
| 14 | 15.4 | 1558 |
| 28 | 28.4 | 1583 |
| 56 | 33.1 | 1642 |

Example 6

| Calcined gypsum | – 28.5% | Cured at 100% r.h., 55°C |
|---|---|---|
| Lime | – 28.5% | Water/solids ratio, 0.55 |
| Fly ash | – 43.0% | |

| Days cured | Compressive strength (MPa) |
|---|---|
| 1 | 3.4 |
| 4 | 20.8 |
| 7 | 22.5 |
| 14 | 26.3 |
| 28 | 31.2 |

Example 7

| $C_4A_3S$ | – 27% | Cured at 100% r.h., 23°C |
|---|---|---|
| Gypsum | – 53% | Water/solids ratio, 0.7 |
| Lime | – 20% | |

| Days cured | Compressive strength (MPa) |
|---|---|
| 1 | 8 |
| 4 | 16 |
| 7 | 20 |
| 14 | 30 |
| 28 | 40 |

10

## Example 8

| | |
|---|---|
| $C_4A_3\bar{S}$ | – 55% |
| Anhydrite | – 20% |
| Fly ash | – 15% |
| Lime | – 10% |

Cured at 100% r.h., 23°C
Water/solids ratio, 0.7

| Days cured | Compressive strength (MPa) |
|---|---|
| 1 | 30 |
| 4 | |
| 7 | 50 |
| 14 | |
| 28 | 60 |

## Example 9

| | |
|---|---|
| $C_4A_3\bar{S}$ | – 20% |
| Anhydrite | – 20% |
| Fly ash | – 36% |
| Lime | – 24% |

Cured at 100% r.h., 23°C
Water/solids ratio, 0.7

| Days cured | Compressive strength (MPa) |
|---|---|
| 1 | 5 |
| 4 | 14 |
| 7 | 22 |
| 14 | 24 |
| 28 | 27 |

Two compositions forming ettringite in accordance with the present invention will now be described by way of example only, with reference to the accompanying drawings, in which:

Figure I is a thermogram (DTA) of samples of composition (A) cured at 2I°C, at different aging times (in Figs. I, 2, and 4-7, E = ettringite, G = gypsum, L = lime);

Figure 2 is a thermogram (DTA) of samples of composition (A) cured at 55°C, at different aging times;

Figure 3 is a graph showing compressive strength vs. square root of time, days curing for composition (A);

Figure 4 is a thermogram (DTA) of samples of composition (B) containing calcined natural gypsum cured at 2I°C, at different aging times;

Figure 5 is a thermogram (DTA) of samples of composition (B) containing calcined natural gypsum, cured at 55°C, at different aging times;

Figure 6 is a thermogram (DTA) of samples of composition (B) containing calcined phosphogypsum, cured at 2I°C, at different aging times;

Figure 7 is a thermogram (DTA) of samples of composition (B) containing calcined phosphogypsum, cured at 55°C, at different aging times; and

Figure 8 is a graph showing compressive strength v. square root of time, days curing for composition (B). Circles, samples containing calcined natural gypsum, and squares, samples containing calcined phosphogypsum.

The hydraulic behaviour of materials comprising calcined gypsum, fly ash, and Portland cement has been investigated at 2l and 55°C, using calcined natural gypsum or phosphogypsum as the source of sulphate. The effect of added lime has also been studied.

In these systems the contribution to strength at very early ages arises from the setting of calcined gypsum and Portland cement. Later contributions to strength are due to the formation of ettringite and calcium silicate hydrates.

Ettringite forms mainly by reaction of calcium sulphate dihydrate, given by the hydration of calcined gypsum, with alumina from fly ash and hydrated lime, added to the system and originated from the hydration of Portland cement. Ettringite forms rapidly, especially at the higher temperature, where phosphogypsum proves to be more reactive than pure gypsum.

The drawings illustrate the feasibility of the formation of such hydraulic binders based on:

(A) calcium sulfate hemihydrate-fly ash-Portland cement and

(B) calcium sulfate hemihydrate-fly ash-lime-Portland cement.

Composition (A) is made by adding 20% portland cement, as the source of lime and provider of early strength, to a mixture containing 30% hemihydrate and 50% fly ash. Composition (B) is made by adding lime to a mixture of 30% hemihydrate, 50% fly ash, and 20% portland cement, in order to increase the conversion of both alumina and calcium sulfate into ettringite. In some samples of composition (B), calcium sulfate hemihydrate was also replaced with calcined phosphogypsum.

## EXPERIMENTAL DETAILS

### Raw materials

The chemical composition of raw materials used is shown in Table I. The hemihydrate was derived from gypsum dehydrated at I50° for I6 hours.

### Compositions

The compositions of the systems investigated are shown in Table 2. The materials were rendered uniform by mixing and sieving to pass a -I50μm sieve.

## TABLE 1

Major chemical constituents (wt %) of the
raw materials used for compositions (A) and (B)

|  | Calcined gypsum | Calcined phospho-gypsum | Portland cement | Fly ash | Lime |
|---|---|---|---|---|---|
| $CaO$ | 38.30 | 39.20 | 65.00 | 5.42 | 64.90 |
| $SiO_2$ | 0.20 | 0.01 | 20.00 | 50.50 | 3.78 |
| $Al_2O_3$ |  |  | 4.66 | 27.80 | 1.08 |
| $Fe_2O_3$ |  |  | 4.33 | 4.61 | 0.59 |
| $MgO$ | 0.08 | 0.38 | 1.43 | 2.24 | 6.15 |
| $Na_2O$ | 0.01 |  |  | 3.81 | 0.05 |
| $K_2O$ |  |  |  | 0.98 | 0.29 |
| $CO_2$ | 1.95 | 0.12 |  |  | 3.05 |
| $SO_3$ | 52.30 | 53.70 | 2.56 | 0.26 |  |
| $P_2O_5$ (total) |  | 0.67 |  |  |  |
| $F-$ (total) |  | 1.23 |  |  |  |
| $H_2O$ | 6.20 | 5.15 |  |  | 22.30 |

## TABLE 2

Compositions (wt %) of the systems investigated.

| Composition | Calcined gypsum* | Lime | Fly ash | Portland cement |
|---|---|---|---|---|
| (A) | 30.0 |  | 50.0 | 20.0 |
| (B) | 26.0 | 13.3 | 43.4 | 17.3 |

* calcined phosphogypsum was also used for compositions (B)

Hydration

The hydration of the systems was studied. In particular, 2 g samples were mixed with water (w/s 0.5), sealed in plastic envelopes, and cured at both 21 and 55°C for 1 to 182 days. At the end of the curing period the specimens were removed, placed in acetone to stop the reaction, crushed and ground in an agate mortar, dried with ether and stored in a desiccator over solid KOH. Small quantities were subjected to thermal analysis (TGA/DTA/DTG) and analysed by X-ray diffraction and for residual lime content. These samples coincide with Examples 1 and 2 respectively.

Strength measurements

Large stocks of the compositions of Table 2 were prepared. The required quantities were then mixed with water (w/s 0.5 for composition (A), and w/s 0.6 for composition (B)), and the pastes were cast into cube moulds with 25 mm edges, and cured at respectively 21 and 55°C at 100% R.H. for 1 to 182 days. At the end of the curing period the specimens were removed and tested, while still wet, perpendicular to the cast face in an Instron testing machine (rate of head-speed, 0.5 mm/min).

The densities of the cast and air-dried specimens and their expansion or shrinkage, were determined by conventional methods.

RESULTS AND DISCUSSION

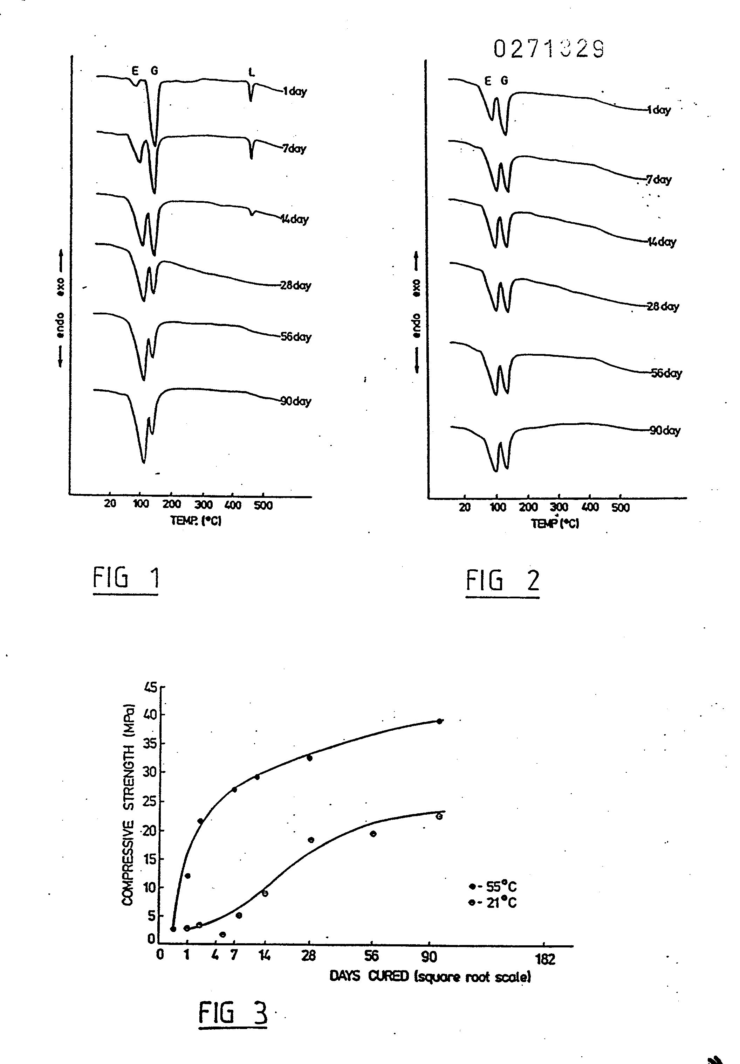

Figures 1 and 2 illustrate the results of differential thermal analysis for composition (A), at 21 and 55°C. Figure 1 clearly shows the diminishing presence of gypsum and lime (liberated from the Portland cement hydration), and the increase of the amount of ettringite formed to 28 days. The reaction is much faster at 55°C (Fig. 2), and no residual lime is detected in the system even after one day of curing. At this temperature there is no evidence of further ettringite formation after 7 days. The diminishing of the reactants and the formation of ettringite was verified by XRD.

In the system under consideration, both at 21 and 55°C, calcium silicate hydrate also forms due to both the hydration of portland cement and the pozzolanic reaction involving fly ash. However, the detectability of calcium silicate hydrate is made difficult by the fact that the endothermic effect related to its dehydration is very close to the much larger effect of ettringite. The lower ettringite-gypsum ratio detected at the higher temperature indicates that the lime liberated from portland cement hydration is predominantly converted into calcium silicate hydrate.

These considerations agree with the strength development as shown in Fig 3. It is seen that curing at 55°C gives much faster hardening at early ages and higher ultimate strength of the cast and cured specimens. At 21°C calcined gypsum and portland cement hydration is primarily responsible for the strength development at very early ages; later contributions are due to the formation of ettringite (up to 28 days) and calcium silicate hydrate. At 55°C the ettringite contribution ceases after 7 days and beyond that time the further formation of calcium silicate hydrate gives the higher ultimate strength. The densities of the cast specimens gradually increased from 1180-1200 kg/m$^3$ (1 d) to 1360-1380 kg/m$^3$ (90 d).

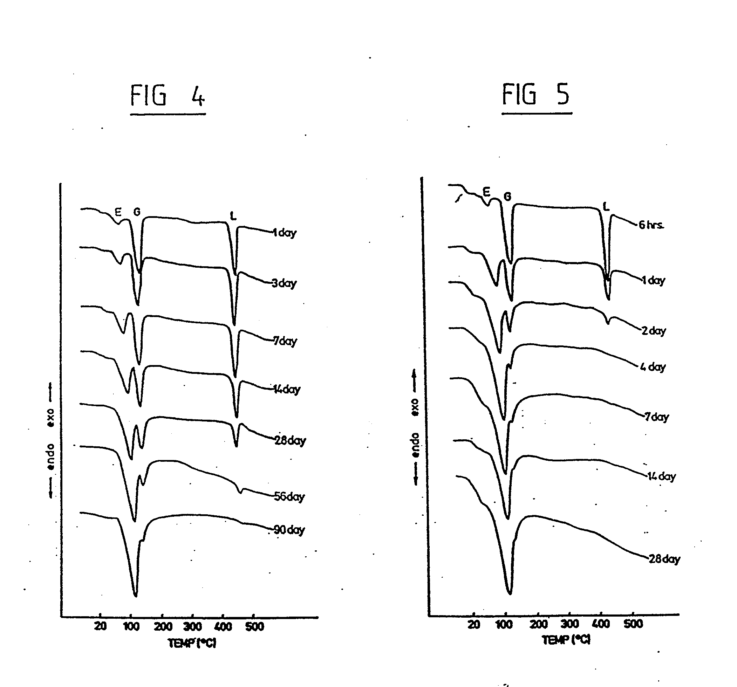

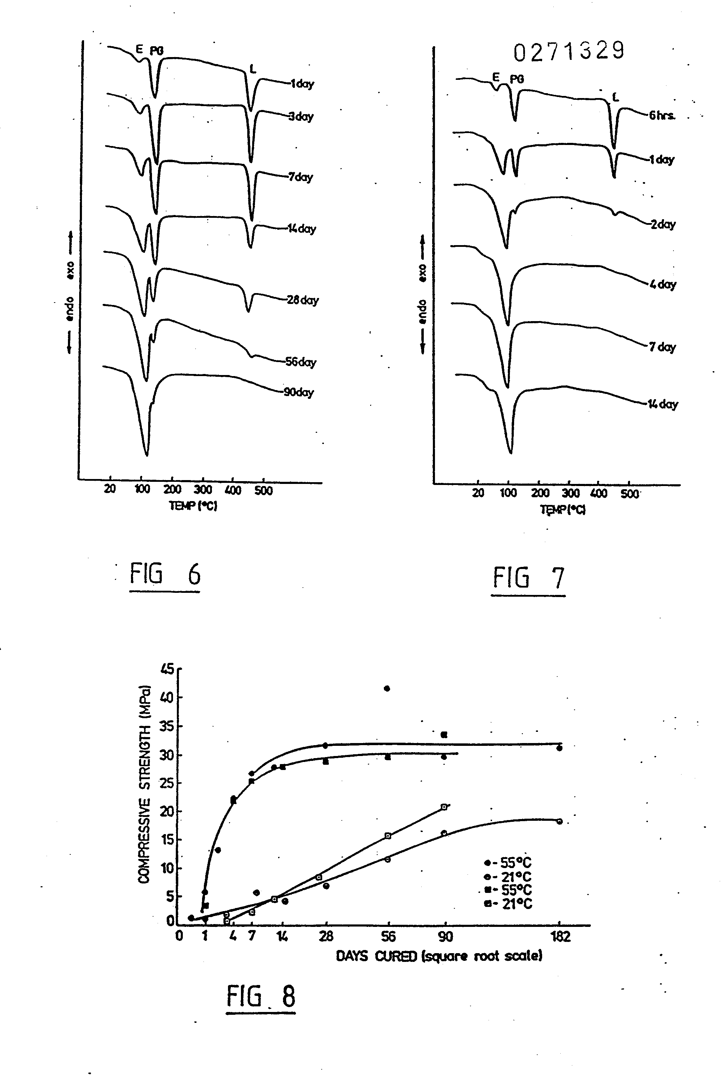

The thermograms for composition (B) containing calcined natural gypsum and cured at 21 and 55°C are shown in Figs 4 and 5, and those containing calcined phosphogypsum in Figs 6 and 7, respectively. Similarly to composition (A), the formation of ettringite is much faster at 55 than at 21°C. In this system, however, the greater availability of lime causes almost complete consumption of gypsum, at both the temperatures tested. Furthermore, it is evident that the compositions containing phosphogypsum reacted more readily than those containing calcined natural gypsum at 55°C. This higher reactivity of phosphogypsum has been noted previously.

The compressive strength of the cured specimens is illustrated in Fig. 8. It is seen that strength develops more readily at higher curing temperatures, but the ultimate strength of the compositions was independent of whether calcined natural gypsum or phosphogypsum was used.

The strength development is also very similar to that shown by composition (A), but it is to be noted that composition (B) appears more interesting as far as durability is concerned as gypsum is almost completely converted into ettringite at longer curing times. In spite of this, no strength retrogression was observed. The densities of the cast and cured specimens gradually increased from 1180-1120 kg/m$^3$ (1 d) to 1330-1350 kg/m$^3$ (90 d). In addition, no measurable shrinkage or expansion of the cube specimens of compositions (A) and (B) was observed during the curing periods investigated.

The present invention has thus provided a ready alternative to the use of Portland cement and particularly if industrial wastes and by-products, such as phosphogypsum, fly ash, and blast furnace slag, are used as the source of sulfate, and calcium and aluminium oxides, the process will result in reduced exploitation of natural resources, protection of the environment, and energy saving.

**Claims**

1. A method of producing a hydraulic binder which comprises preparing an intimate mixture of powdered source materials in natural and/or industrial by-product form of reactive $CaSO_4$, CaO and $Al_2O_3$ with or without $SiO_2$, said powdered source materials having a maximum particle size of 150μm, and

hydrating the intimate mixture at a ratio in the range of I part powdered source materials to 0.35-I part water (by weight), said source materials being mixed in such proportions as to produce a cured hydraulic binder comprising from 70% ettringite and a maximum 30% calcium silicate hydrates.

2. A method of producing a building element which comprises preparing an intimate mixture of powdered source materials in natural and/or industrial by-product form of reactive $CaSO_4$, CaO and $Al_2O_3$ with or without $SiO_2$, said powdered source materials having a maximum particle size of 150μm, and hydrating the intimate mixture at a ratio in the range of I part powdered source materials to 0.35-I part water (by weight), and before or during said hydrating step introducing the intimate mixture into a mould to define the building product, said source materials being mixed in such proportions as to produce a cured building product comprising from 70% ettringite and a maximum 30% calcium silicate hydrates.

3. A method according to claim I or claim 2 wherein the reactive $CaSO_4$ powdered material is selected from one or more of the group of pure gypsum, natural gypsum, chemical gypsum and calcium sulphoaluminate.

4. A method according to claim 3 wherein the chemical gypsum is selected from one or more of the group of phosphogypsum, sulphogypsum and titanogypsum.

5. A method according to claim 3 or claim 4 wherein the gypsum is hydrated.

6. A method according to claim 3 or claim 4 wherein the gypsum is calcined.

7. A method according to claim 3 or claim 4 wherein the gypsum is present as anhydrite.

8. A method according to any one of the preceding claims wherein the reactive $Al_2O_3$ powdered material is selected from one or more of the group of gibbsite, $Al(OH)_3$, boehmite, fly ash, blast furnace slag, clay, clay waste, granite dust, bauxite, bauxite waste, basalt, Portland cement, precipitation dust and calcium sulphoaluminate.

9. A method according to any one of the preceding claims wherein the reactive CaO powdered material is selected from one or more of the group of hydrated lime, quicklime, fly ash, blast furnace slag, granite dust, precipitation dust, Portland cement and calcium sulphoaluminate.

10. A method according to any one of the preceding claims wherein the $SiO_2$ powdered material is selected from one or more of the group of pure silica, commercial silica, clay, clay waste, fly ash, blast furnace slag, granite dust, precipitation dust, basalt and Portland cement.

11. A method according to any one of the preceding claims wherein the intimate mixture is hydrated at a temperature in the range of 20-85°C.

12. A method according to any of the preceding claims wherein the intimate mixture is hydrated at up to 100% relative humidity.

13. A method according to any one of the preceding claims wherein the hydraulic binder or building element comprises at least 90% ettringite.

14. A hydraulic binder when produced by the method claimed in claim I.

15. A building element when produced by the method claimed in claim 2.

16. A composition suitable for forming a hydraulic binder or building element which comprises powdered source materials in natural and/or industrial by-product form of reactive $CaSO_4$, CaO and $Al_2O_3$ with or without $SiO_2$, said powdered source materials having a maximum particle size of 150μm and being present in such proportions as to produce a cured hydraulic binder comprising from 70% ettringite and a maximum 30% calcium silicate hydrates when intimately mixed and hydrated with from 0.35-1 part water (by weight) to 1 part powdered source material.

FIG 1

0271329

FIG 2

FIG 3

0271329

FIG 4

FIG 5

0271329

FIG 6

FIG 7

FIG 8